# EUROPEAN PATENT SPECIFICATION

(11) **EP 2 589 825 B1**
(45) Date of publication and mention of the grant of the patent: **30.05.2018**
(21) Application number: 12182425.4
(22) Date of filing: 30.08.2012
(51) Int. Cl.: F16B 21/02

(54) **Fastening method and fastening arrangement**
Befestigungsverfahren und Befestigungsanordnung
Procédé de fixation et agancement de fixation

(30) Priority: 03.11.2011 DE 102011117779
(43) Date of publication of application: 08.05.2013
(73) Proprietor: Newfrey LLC, New Britain, CT 06053 (US)
(72) Inventor: Rosemann, Frank, 35394 Giessesn (DE); Kempf, Christian, 35394 Giessesn (DE)
(74) Representative: SBD IPAdmin

(56) References cited:
- EP-A1- 0 115 671
- FR-A- 1 155 930
- US-A- 4 846 612
- US-A1- 2008 226 413

## Description

The present invention relates to a method for fastening a structural element, in particular a strip arrangement, to a workpiece, in particular to a body portion, with the steps of securing a stud to the workpiece, of premounting a fastening element on the structural element, the fastening element having a stud receptacle, and of pushing the fastening element in a longitudinal direction onto the stud.

The present invention relates, furthermore, to a fastening element which is suitable particularly for carrying out this method, with a hollow basic body, the inner space of which has a stud receptacle for the axial reception of a stud and on the outside of which a fastening portion for axially securing a structural element is formed.

Finally, the present invention relates to a fastening arrangement with a stud which is joined to a surface of a workpiece and with a fastening element which has a stud receptacle and a fastening portion, the fastening element being pushed onto the stud, and a structural element being secured axially to the fastening element.

Fastening systems of this type are known, in particular, in the field of motor vehicle body construction. On the one hand, it is known to join studs to workpieces, such as body panels. This may take place, for example, by what is known as stud welding. Alternatively, it is also known to glue studs to workpieces or, if the stud and workpiece are formed from a thermoplastic, to carry out the joining operation by means of a thermoplastic welding method.

Fastening elements, which have a stud receptacle, can then be secured to such studs which usually project perpendicularly with respect to a surface of the workpiece. For this purpose, the fastening element, which is produced, for example, as a clip from a plastic, is pushed onto the stud, so that securing to the stud takes place in a radial direction and, by suitable securing means, in an axial direction.

Further components can then be secured to such a fastening element. These may be, for example, electrical cable bunches, trim parts, dashboard parts, etc.

In fastening arrangements in which the stud has a thread, the axial securing of the fastening element to the stud usually takes place in that, for example, one or more blocking elements engage radially elastically into the thread flight. This presents the problem that the relative rotary position of the stud may be important. This is because the blocking elements engage into the thread flight at different points, depending on the rotary position, and therefore differences may arise with regard to the axial fixing height.

In order to avoid this, it would be conceivable to fix the rotary position of the stud before it is joined to the workpiece. This means, however, that it is relatively costly to detect the rotary position of the stud in a joining tool.

Particularly in those fastening elements which are to be secured to a workpiece by means of a plurality of fastening arrangements, such as, for example, strip arrangements, the different fixing height may be a disadvantage. This applies particularly when the strip arrangements are arranged in a visible region.

Against the above background, an object of the invention is to specify an improved method for fastening a structural element to a workpiece, an improved fastening element and an improved fastening arrangement.

This object is achieved, on the one hand, by means of a method for fastening a structural element, in particular a strip arrangement, to a workpiece, in particular to a body portion, with the steps of securing a stud to the workpiece, of premounting a fastening element on the structural element, the fastening element having a stud receptacle, of pushing the fastening element in a longitudinal direction onto the stud and of subsequently moving the structural element in a direction (x) transverse with respect to the longitudinal direction (z), a driver portion of the structural element engaging on the fastening element in such a way that the fastening element is rotated about the longitudinal axis.

Furthermore, the above object is achieved by means of a fastening element, in particular for carrying out the abovementioned method, with a hollow basic body with at least one latching nose extending radially from the basic body, the inner space of which has a stud receptacle for the axial reception of a stud and on the outside of which a fastening portion for axially securing a structural element is formed, there being formed, furthermore, on the basic body a boss portion which has at least one boss extending radially from the basic body, and is designed, during a movement of the axially secured structural element transversely with respect to the axial direction, to be driven by a driver portion of the structural element, so that the fastening element rotates, the fastening portion has a first flange portion and a second flange portion which is spaced axially from the first flange portion, wherein the second flange portion extending in the circumferential direction over an angular range of less than 180°. The second flange portion is aligned in the axial direction with a boss portion and/or with the at least one latching nose. The latching nose is deflectable elastically in the axial direction and designed to engage into a latching depression of the structural element when the structural element is premounted on the fastening element.

Finally, the above object is achieved by means of a fastening arrangement with a stud which is joined to a surface of a workpiece, and with a fastening element which has a stud receptacle and a fastening portion, the fastening element being pushed onto the stud, and a structural element being secured axially to the fastening element, the fastening element being a fastening element according to the invention.

The basic idea of the fastening system according to the invention is to secure the structural element to the stud by means of the fastening element and subsequently to move the said structural element in a direction transverse with respect to the axial direction, the fastening element being rotated about the longitudinal axis. What can be achieved thereby is that the fastening element, together with the structural element secured axially on it, is drawn, for example, in a direction towards the workpiece (for example, as a result of the engagement of at least one blocking element on a thread flight). What can ultimately be achieved thereby is that the structural element is always positioned ideally with respect to the workpiece, in particular in the same height position. What can in this case be achieved, furthermore, is that the structural element is generally secured to the workpiece under certain axial prestress.

The object is thus achieved in full.

In the fastening method according to the invention, the movement step involves displacement of the structural element in a direction transverse with respect to the longitudinal direction.

In general, it is indeed also conceivable that the movement step involves rotation of the structural element. However, a displacement step can usually be carried out more simply. Furthermore, such a displacement step is preferably

active simultaneously for a plurality of fastening arrangements, by means of whichan elongate structural element, such as a strip arrangement, is fastened to a workpiece.

In this embodiment, therefore, a strip arrangement having a plurality of fastening elements secured to it can first be pressed onto a corresponding plurality of studs previously secured to the workpiece. As a result of the subsequent displacement movement of the structural element, the fastening elements are then in each case rotated about their longitudinal axis and consequently drawn preferably in a direction towards the workpiece.

According to a further preferred embodiment, the stud has in this case at least one thread flight, the stud receptacle of the fastening element having at least one blocking element engaging on the thread flight, so that, during the movement step, the fastening element, together with the structural element secured to it, is moved in the direction of the longitudinal axis.

According to a further preferred embodiment, the fastening element is secured to the structural element by latching during the premounting step, the latching connection being released during the movement step.

On the one hand, the situation where, after the premounting step, the fastening element unintentionally comes loose again from the structural element can thereby be prevented. Particularly during the premounting of a plurality of fastening elements on a structural element, such as a strip arrangement, the individual fastening elements can consequently be premounted securely in succession, without running the risk that a previously premounted fastening element comes loose again. Since the latching connection is released again during the movement step, greater degrees of freedom in the relative end position between the structural element and the fastening element are obtained.

According to an especially preferred embodiment, there is in this case provision for the fastening element to be secured to the structural element in a floating manner in at least one direction transverse with respect to the longitudinal direction.

As a result, particularly in the case of a structural element in the form of a strip arrangement which is secured to a workpiece by means of a plurality of fastening arrangements, relatively large tolerances in the spacings between the studs and/or in the axial alignment of the studs can be compensated.

Moreover, due to the floating mounting, distortions caused by temperature fluctuations, such as may occur in vehicles, especially in the outside region (visible strips, etc.), can be avoided.

The latching connection may in this case be at least partially released even while the fastening element is being pushed in the longitudinal direction onto the stud, if there are relatively large tolerances in the spacings between the studs or in their axial alignment. Since there is no longer any risk at this time that the fastening elements come loose from the structural element again, what can also be achieved thereby is that relatively large tolerances can be compensated.

In the fastening element according to the invention, it is advantageous if the boss portion has at least one boss extending radially from the basic body.

Such a boss may be driven, for example, by means of a driver portion, if the latter is provided on a strip arrangement and extends in a direction transverse with respect to the displacement direction.

According to a further preferred embodiment, at least one latching nose extends radially from the basic body, the latching nose being deflectable elastically in the axial direction and being designed to engage into a latching connection of the structural element when the structural element is premounted on the fastening element.

In general, it is indeed conceivable to implement the boss and the latching nose by means of a single nose extending radially. It is especially preferable, however, if the boss and the latching nose extend separately from the basic body. As a result, on the one hand, a more reliable latching connection in the premounting position can be achieved. On the other hand, jamming can thereby be avoided when a driver portion of the structural element engages on the boss in order to rotate the fastening element.

The structural element may be fixed axially to the fastening element in various ways.

It is especially preferable, however, if the fastening portion has a first flange portion and a second flange portion which is spaced axially from the first flange portion.

In this embodiment, the fastening element can, for example, be pushed on between two parallel-extending webs of the structural element, the webs engaging between the first and the second flange portion. The webs may in this case preferably extend parallel to the displacement direction. A driver portion may be formed on one or on both webs.

It is especially preferable in this case if the second flange portion is aligned in the axial direction with a boss portion and/or with a latching nose.

In this embodiment, it is advantageous that the fastening element can be produced by means of a relatively simple injection-moulding die. Furthermore, it is possible to provide a latching device, for example, on a web of the structural element, so that it is possible for the latching connection to be set up in a simple way when the fastening element is being pushed onto the webs.

It is especially preferable, furthermore, if the second flange portion extends in the circumferential direction over an angular range of less than 180°.

By virtue of this measure, it is possible to provide on the basic body two radially opposite bosses and/or two radially opposite latching noses, the second flange portion being arranged in the circumferential direction on only one side between the bosses or latching noses.

It is thereby possible, for example, to use identical strip arrangements for mounting on a vehicle on the left and right, a driver portion engaging on one of the bosses in the case of mounting on one vehicle side and engaging on the other boss of such a fastening element in the case of mounting on the other vehicle side. The same fastening element can therefore be used for mounting strips on a vehicle both on the left and on the right.

Owing to the measure that the second flange portion extends in the circumferential direction over only an angular range of less than 180°, it can thereby be ensured that a driver portion of a structural element can engage both on one boss and on the other radially opposite boss, without being impeded by the second flange portion.

The second flange portion preferably has an axial fixing function in the premounting position only. As soon as the structural element is secured to the stud via the fastening element and is suppressed under prestress against the workpiece, the second flange portion usually no longer has to absorb any forces.

Furthermore, it is preferable, overall, if the stud receptacle has at least one blocking element deflectable elastically in the radial direction, such as a blocking nose or the like, which can engage, for example, into a thread flight of a threaded stud.

Preferably, at least two, in particular three blocking elements are provided, distributed in the circumferential direction, in the stud receptacle.

In the fastening arrangement according to the invention, it is advantageous if the structural element is a strip arrangement which is secured to the workpiece by means of a plurality of fastening arrangements.

Furthermore, in the fastening arrangement, it is advantageous if a trim element which covers the fastening arrangement is secured to the structural element.

As a result, particularly when a strip arrangement is mounted in the visible region of a vehicle, the fastening arrangement is no longer visible when the trim element is secured to the structural element.

Overall, what can be achieved by the fastening system according to the invention is that the fastening of the structural element via the fastening element is adapted in terms of height and a pull towards the workpiece is exerted. Mounting inaccuracies in terms of height can thereby be compensated. The structural element is in this case drawn towards the workpiece and therefore, after the step of moving the structural element, is seated so as to be free of rattling with respect to the workpiece.

It would be appreciated that the features mentioned above and those yet to be explained below can be used not only in the combination specified in each case, but also in other combinations or alone, without departing from the scope of the present invention.

Exemplary embodiments of the invention are illustrated in the drawing and are explained in more detail in the following description. In the drawing:
- Fig. 1: shows a diagrammatic perspective part-sectional view of a first embodiment of a fastening arrangement not covered by the claims;

- Fig. 2: shows a view from above of a fastening element according to a an embodiment according to the invention;
- Fig. 3: shows a view of the fastening element of Fig. 2 from the side;
- Fig. 4: shows a view of the fastening element of Fig. 2 from the front;
- Fig. 5: shows a view of the fastening element of Fig. 2 from below;
- Fig. 6: shows a perspective view of the fastening element of Fig. 2 obliquely from below;
- Fig. 7: shows a perspective view of the fastening element of Fig. 2 obliquely from above;
- Fig. 8: shows a strip arrangement with a fastening element according to Fig. 2 to 7 premounted on it;
- Fig. 9: shows the strip arrangement of Fig. 8 after a displacement step has been carried out; and
- Fig. 10: shows a cross-sectional view through the strip arrangement of Fig. 8.

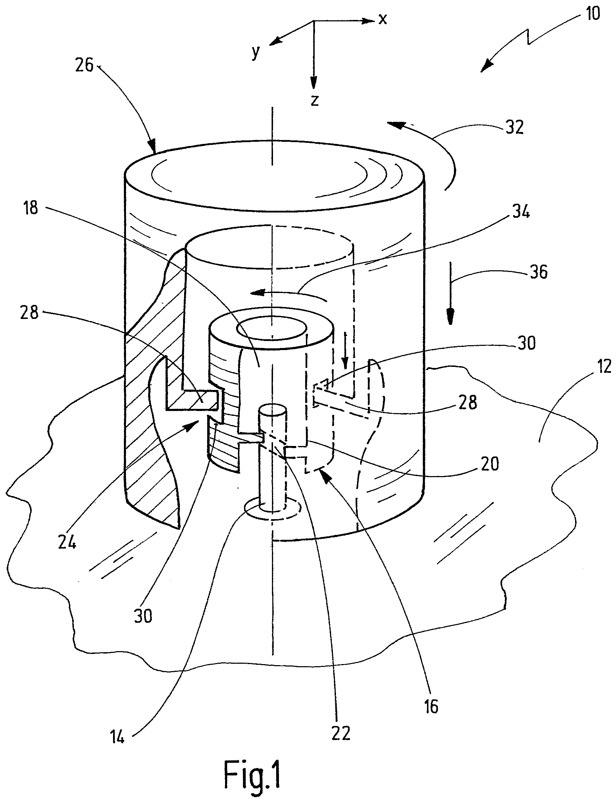

In Fig. 1, a first embodiment of a fastening arrangement is designated in general by 10. The fastening arrangement 10 contains a workpiece 12, such as, for example, a body panel, to the surface of which a stud 14 is joined, for example by stud welding, by stud gluing or by thermoplastic welding. The surface of the workpiece 12 extends in a plane which is spanned by coordinates x, y. The stud 14 extends perpendicularly thereto in a direction z. The stud is preferably joined to the surface of the workpiece 12 by means of a flange portion and has a shank portion.

The fastening arrangement 10 has, furthermore, a fastening element 16. The fastening element 16 is designed as a hollow one-piece component (preferably made from plastic) and has a stud receptacle 18 oriented in the z-direction. A plurality of blocking elements 20 are formed on the inner circumference of the stud receptacle 18 and are preferably designed to be deflectable in the radial direction.

A thread, with at least one thread flight 22, which is illustrated diagrammatically in Fig. 1, is preferably formed on the shank of the stud 14.

The fastening element 16 is pushed onto the stud 14 in such a way that the stud 14 is received in the stud receptacle 18 and the blocking elements 20 are pressed elastically radially into the thread flight 22, in such a way that the fastening element 16 is secured axially to the stud 14. The blocking elements 20 may be arranged, distributed over the circumference, at the same axial height or at a different axial height, as illustrated diagrammatically in Fig. 1.

The fastening arrangement 10 has, furthermore, a structural element 26 which is secured in the axial direction to the fastening element 16. For this purpose, in the present case, the structural element 26 has a plurality of fastening fingers 28 which are arranged, distributed on the circumference, and which engage into respective radial recesses 30 on the outer circumference of the fastening element 16. The fastening fingers 28 may likewise be deflectable elastically radially.

To produce the fastening arrangement 10, the fastening element 16 is first premounted on the structural element 26 in that the fastening element 16 is secured to the structural element 26 such that the fastening fingers 28 engage into the respective radial recesses 30 of the fastening element 16.

Subsequently, the premounted arrangement consisting of the fastening element 16 and of the structural element 26 is pressed onto the stud 14 in the axial direction (z-direction), the blocking elements 20 engaging into the thread flight 22.

Subsequently, a movement step 32 takes place, in which, in the present embodiment, the structural element 26 is rotated about the longitudinal axis. In this case, as a result of the engagement of the fastening fingers 28 into the radial recesses 30, the fastening element 16 is driven, as shown at 34, so that the fastening element 16 is likewise rotated about the longitudinal axis. Since the blocking elements 20 engage on the thread flight 22, the fastening element 16 is consequently drawn in a direction towards the surface of the workpiece 12, as shown by an axial movement direction 36. The structural element 26 is in this case driven in the axial direction and can thus be pressed as far as it will go onto the surface of the workpiece 12, engagement between the blocking elements 20 and the thread flight 22 generating a certain axial prestress. The structural element 26 can thereby be secured, free of rattling, to the workpiece 12.

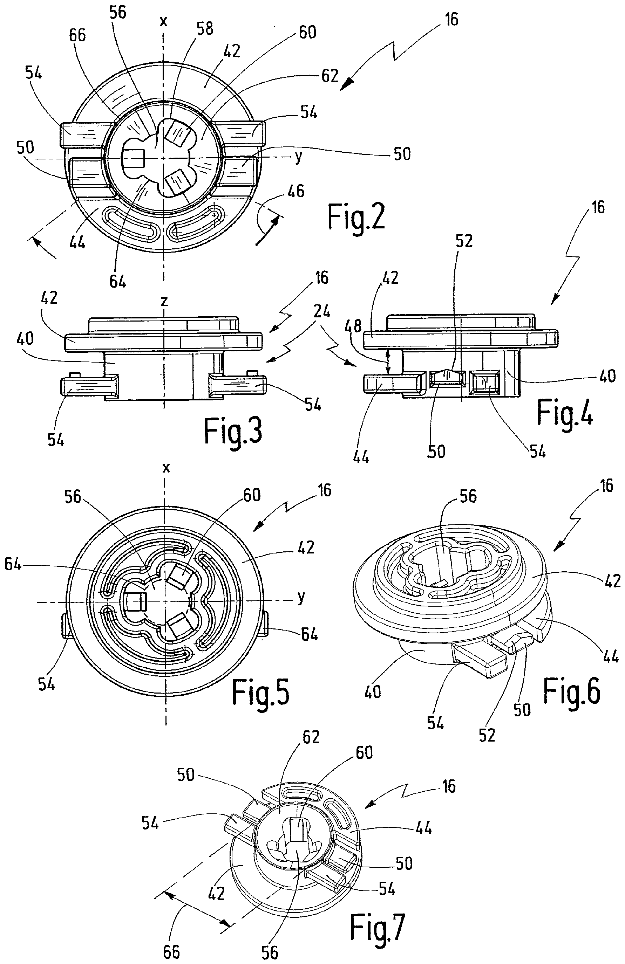

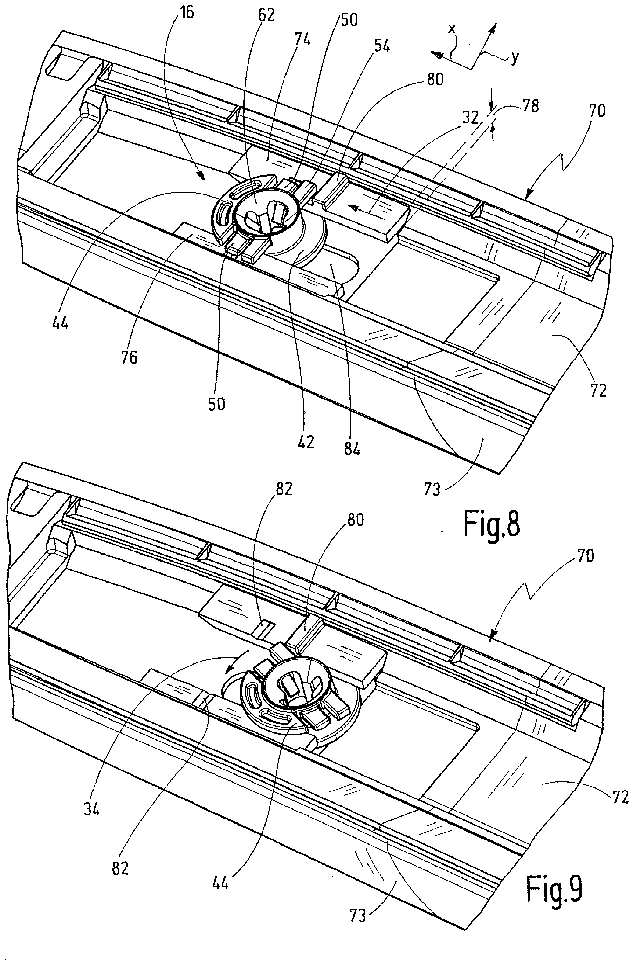

A fastening element 16 of an alternative embodiment is shown in Fig. 2 to 7. The fastening element 16 of Fig. 2 to 7 is designed, in particular, for producing a fastening arrangement, such as is shown Fig. 8 to 10. The embodiment, shown in Fig. 2 to 10, of a fastening arrangement generally corresponds in terms of set-up and functioning to the fastening arrangement of Fig. 1. Identical elements are therefore identified by the same reference symbols. Essentially, the differences are explained below.

The fastening element 16 of Fig. 2 to 7 has a hollow-cylindrical basic body 40, on the outer circumference of which a first flange portion 42 and a second flange portion 44 are formed. The second flange portion 44 extends over an angular range 46 of less than 180°, in the present case of about 130°. The flange portions 42, 44 are spaced axially from one another, as shown at 48.

Furthermore, two latching noses 50 extend from the basic body 40 and are arranged radially on opposite sides of the basic body 40. The latching noses 50 are in this case aligned axially with the second flange portion 44 and are adjacent in the circumferential direction to the second flange portion 44.

Furthermore, two radially opposite bosses 54 extend from the basic body 40, specifically in such a way that they extend approximately parallel to the latching noses 50. The bosses 54 are spaced in the circumferential direction from the latching noses 50.

The latching noses 50 have in each case on their underside (on the side facing the first flange portion 42) latching projections 52 which project into the region of the spacing 48.

The latching noses 50 are in this case connected to the basic body 40 in such a way that they are deflectable elastically to a limited extent in the axial direction.

The inner space of the basic body 40 defines a stud receptacle 56. The stud receptacle 56 has in this case three indentations 58 which are spaced from one another in a circumferential direction and in which blocking elements 60 are secured so as to be elastically deflectable radially. The blocking elements 60 in this case extend, in the state stretched out non-elastically, obliquely downwards (from the second flange portion 44 towards the first flange portion 42).

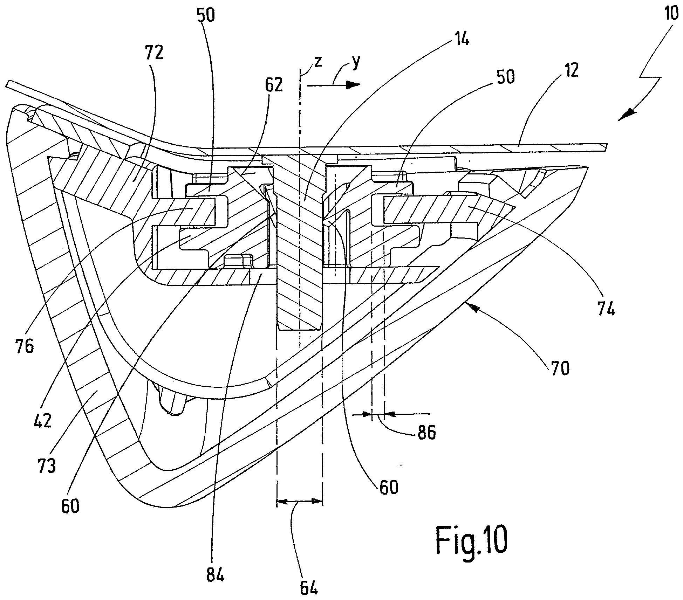

The free ends of the blocking elements 60 in this case define a diameter which is somewhat smaller than an outside diameter 64 of the stud 14 (see Fig. 10).

Furthermore, the stud receptacle 56 has an introduction cone 62 with an introduction diameter 66 which is preferably at least twice as large as the stud diameter 64.

The fastening element 16 of Fig. 2 to 7 preferably serves for securing a strip arrangement 70 to a workpiece 12. The strip arrangement 70, which is shown in Fig. 8 to 10, has in this case a basic strip 72 to which a trim strip 73 is secured.

The basic strip 72 has a first web 74 extending in the x-direction and a second web 76 extending parallel thereto. The webs 74, 76 are spaced from one another in the y-direction by an amount which is preferably larger than the outside diameter of the basic body 40.

The webs 74, 76 have in each case a thickness 72 which is equal to or smaller than or equal to the axial spacing 48 between the flange portions 42, 44. The fastening element 16 of Fig. 2 to 7 is premounted on the basic strip 72 in such a way that it is pushed in the x-direction between the webs 74, 76, specifically with the two bosses 54 in front. A driver portion 80 extending in the y-direction is formed on the top side of the first web 74 and is designed for engaging on the assigned boss 54. Furthermore, formed on the top side of at least one of the webs 74, 76 is a latching depression 82, the shape of which is adapted to the latching projections 42 of the latching noses 50. When the fastening element 16 is being pushed on axially between the webs 74, 76, the latching noses 50 are deflected axially until the latching projections 52 finally engage into the latching depressions 82. In this position, the premounting position is reached. In the premounting position, one boss 54 is either in contact with the driver portion 80 or, however, is preferably spaced slightly from the latter (in the x-direction).

The basic strip 72 preferably has a plurality of such webs 74, 76 which are arranged so as to be distributed over the strip axis. In this case, first, a corresponding number of fastening elements 16 are premounted on the respective web arrangements until a position, as shown in Fig. 8, is reached.

In the premounting position, as shown in Fig. 8, the introduction cones 62 of the fastening elements 16 face away from the trim strip 72 and face a corresponding number of studs joined to a surface of a workpiece 12. In a mounting step, the strip arrangement 70, together with the fastening elements 16 premounted on it, is pressed onto the studs 14, as shown in Fig. 10. In this case, the blocking elements 60 engage on the outer circumference of the shank of the stud 14 which is preferably designed as a threaded stud with at least one thread flight. Consequently, as shown in Fig. 10, the strip arrangement 70 is fixed in the axial direction z to the stud 14.

In a subsequent final mounting step, at least the basic strip 72 is displaced in the x-direction, that is to say transversely with respect to the axis z of the stud 14, as shown at 32 in Fig. 8. The driver portion 8 thereby engages on the assigned boss 54. Since the fastening element 16 is then fixed radially to the stud 14, the fastening element 16 (or all the fastening elements 16) is in this case rotated, as shown at 34 in Fig. 9. In this case, the latching connection between the latching projections 52 and the latching depressions 82 is released. As a result of the rotation of the fastening elements 16, these are drawn in the manner of nuts towards the workpiece 12, so that the strip arrangement 70 secured axially to the fastening elements 16 is also drawn axially towards the workpiece 12. Height compensation can thereby take place, which may occur, for example, because the blocking elements 16 engage on the various studs 14 in each case in different rotary positions and consequently set up a relatively different height position.

As a result of the final mounting step, these height differences are compensated, and prestress between the workpiece 12 and the strip arrangement 70 is preferably implemented.

The basic strip may in this case have a bridge portion which bridges the webs 74, 76 and in which is preferably formed a recess 84, the diameter of which is larger than the diameter of the stud 14, so that the stud 14 can pass, unimpeded, through the recess 84. Furthermore, the webs 74, 76 are spaced from one another in such a way that radial play 86 is set up between the outer circumference of the basic body 40 and the respective webs 74, 76, as shown in Fig. 10. The fastening elements 16 can thereby be mounted on the basic strip 72 in a floating manner in the radial direction. Furthermore, the fastening elements 60 are also mounted in a floating manner in the radial direction x with respect to the basic strip 72 (and the trim strip 73 firmly connected to it). Tolerances of the stud spacings and stud alignments can thereby be compensated even in the mounting step.

The trim strip 73 can be mounted on the basic strip 72, for example by being snapped on, after the final mounting strip has been carried out. Alternatively, it is possible to secure the trim strip 73 to the basic strip 72 beforehand and displace it, together with the basic strip 72, in the direction 32 in order to carry out the final mounting.

## Claims

1. Method for fastening a structural element (26; 70), in particular a strip arrangement (70), to a workpiece (12), in particular to a body portion, with the steps:
- securing a stud (14) to the workpiece (12);
- premounting a fastening element (16) on the structural element (26; 70), the fastening element (16) having a stud receptacle (18; 56);
- pushing the fastening element (16) in a longitudinal direction (z) onto the stud (14); and
- moving the structural element (26; 70) in a direction (x) transverse with respect to the longitudinal direction (z), a driver portion (28; 80) of the structural element (26; 70) engaging on the fastening element (16) in such a way that the fastening element (16) is rotated (34) about the longitudinal axis (z).

2. Method according to Claim 1, the stud (14) having at least one thread flight (22), and the stud receptacle (18; 56) having at least one blocking element (20; 60) engaging on the thread flight (22), so that, during the movement step (32), the fastening element (16), together with the structural element (26; 70) secured to it, is moved in the direction of the longitudinal axis (z).

3. Method according to one of Claims 1 to 2, the fastening element (16) being secured to the structural element (70) by latching during the premounting step, and the latching connection (52, 82) being released during the movement step (32).

4. Method according to one of Claims 1 to 3, the fastening element (16) being secured to the structural element (70) in a floating manner in at least one direction (y) transverse with respect to the longitudinal direction (z).

5. Fastening element (16), in particular for carrying out the method according to one of Claims 1 to 4, with a hollow basic body (40) with at least one latching nose (50) extending radially from the basic body (40), , the inner space of which has a stud receptacle (18; 56) for the axial reception of a stud (14) and on the outside of which a fastening portion for axially securing a structural element (26; 70) is formed, there being formed, furthermore, on the basic body (40) a boss portion (54) which has at least one boss (54) extending radially from the basic body (40), and is designed, during a movement (32) of the axially secured structural element (26; 70) transversely with respect to the axial direction, to be driven by a driver portion (28; 80) of the structural element (26; 70), so that the fastening element (16) rotates, wherein the fastening portion has a first flange portion (42) and a second flange portion (44) which is spaced axially from the first flange portion (42), the second flange portion (44) extending in the circumferential direction over an angular range (46) of less than 180°, and wherein the second flange portion (44) is aligned in the axial direction with a boss portion (54) and/or with the at least one latching nose (50) wherein the latching nose (50) is deflectable elastically in the axial direction (z) and designed to engage into a latching depression (82) of the structural element (70) when the structural element (70) is premounted on the fastening element (16).

6. Fastening element according to Claim 5, the stud receptacle (18; 56) having at least one blocking element (20; 60) deflectable elastically in the radial direction.

7. Fastening arrangement (10) with a stud (14) which is joined to a surface of a workpiece (12) and with a fastening element (16) which has a stud receptacle (18) and a fastening portion (24), the fastening element (16) being pushed onto the stud (14), and a structural element (26; 70) being secured axially to the fastening element (16), the fastening element being a fastening element (16) according to one of Claims 5 to 6.

8. Fastening arrangement according to Claim 7, the structural element being a strip arrangement (70) which is secured to the workpiece (12) by means of a plurality of fastening arrangements (10).

9. Fastening arrangement according to Claim 7 or 8, a trim element (73) which covers the fastening arrangement (10) being secured to the structural element (70).

## Patentansprüche

1. Verfahren zum Befestigen eines Strukturelements (26; 70), insbesondere einer Streifenanordnung (70), an einem Werkstück (12), insbesondere an einem Körperbereich, mit folgenden Schritten:
- Sichern eines Stifts (14) an dem Werkstück (12);
- Vormontieren eines Befestigungselements (16) an dem Strukturelement (26; 70), wobei das Befestigungselement (16) eine Stiftaufnahme (18; 56) umfasst;
- Drücken des Befestigungselements (16) in einer Longitudinalrichtung (z) auf den Stift (14); und trimtrim
- Bewegen des Strukturelements (26; 70) in einer Richtung (x) transversal in Bezug auf die Longitudinalrichtung (z), wobei ein Treiberbereich (28; 80) des Strukturelements (26; 70) am Befestigungselement (16) derart eingreift, dass das Befestigungselement (16) um die Longitudinalachse (z) rotiert (34) wird.

2. Verfahren nach Anspruch 1, wobei der Stift (14) mindestens einen Gewindegang (22) umfasst, und wobei die Stiftaufnahme (18; 56) mindestens ein Blockierelement (20; 60) umfasst, das am Gewindegang (22) eingreift, so dass während des Bewegungsschritts (32) das Befestigungselement (16) zusammen mit dem Strukturelement (26; 70), das an ihm gesichert ist, in die Richtung der Longitudinalachse (z) bewegt wird.

3. Verfahren nach einem der Ansprüche 1 bis 2, wobei das Befestigungselement (16) am Strukturelement (70) durch Einrasten während des Vormontierschrittes gesichert wird, und wobei die Einrastverbindung (52, 82) während des Bewegungsschrittes (32) gelöst wird.

4. Verfahren nach einem der Ansprüche 1 bis 3, wobei das Befestigungselement (16) am Strukturelement (70) schwimmend in mindestens einer Richtung (y) transversal in Bezug auf die Longitudinalrichtung (z) gesichert ist.

5. Befestigungselement (16), insbesondere zum Ausführen des Verfahrens nach einem der Ansprüche 1 bis 4, mit einem hohlen Grundkörper (40) mit mindestens einer Rastnase (50), die radial vom Grundkörper (40) aus verläuft, wobei dessen innerer Zwischenraum eine Stiftaufnahme (18; 56) zur axialen Aufnahme eines Stifts (14) umfasst, und wobei an dessen Außenseite ein Befestigungsbereich zum axialen Sichern eines Strukturelements (26; 70) ausgebildet ist, wobei außerdem an dem Grundkörper (40) ein Vorsprungbereich (54) ausgebildet ist, der mindestens einen Vorsprung (54) aufweist, der radial vom Grundkörper (40) aus verläuft, und der so entworfen ist, dass er während einer Bewegung (32) des axial gesicherten Strukturelements (26; 70) transversal in Bezug auf die Axialrichtung mittels eines Treiberbereichs (28; 80) des Strukturelements (26; 70) angetrieben wird, so dass das Befestigungselement (16) rotiert, wobei der Befestigungsbereich einen ersten Flanschbereich (42) und einen zweiten Flanschbereich (44), der axial vom ersten Flanschbereich (42) beabstandet ist, umfasst, wobei der zweite Flanschbereich (44) in der Umfangsrichtung über einen Winkelbereich (46) von weniger als 180° verläuft, und wobei der zweite Flanschbereich (44) in der Axialrichtung mit einem Vorsprungbereich (54) und/oder mit der mindestens einen Rastnase (50) ausgerichet ist, wobei die Rastnase (50) elastisch in der Axialrichtung (z) verbiegbar ist und so entworfen ist, dass sie in eine Rastausnehmung (82) des Strukturelements (70) eingreift, wenn das Strukturelement (70) am Befestigungselement (16) vormontiert ist.

6. Befestigungselement nach Anspruch 5, wobei die Stiftaufnahme (18; 56) mindestens ein Blockierelement (20; 60) aufweist, das elastisch in der Radialrichtung biegbar ist.

7. Befestigungsanordnung (10) mit einem Stift (14), der mit einer Fläche eines Werkstücks (12) verbunden ist, und mit einem Befestigungselement (16), der eine Stiftaufnahme (18) und einen Befestigungsbereich (24) umfasst, wobei das Befestigungselement (16) auf den Stift (14) gedrückt wird, und wobei ein Strukturelement (26; 70) axial am Befestigungselement (16) gesichert wird, wobei das Befestigungselement ein Befestigungselement nach einem der Ansprüche 5 bis 6 ist.

8. Befestigungsanordnung nach Anspruch 7, wobei das Strukturelement eine Streifenanordnung (70) ist, die an dem Werkstück (12) mittels einer Mehrzahl von Befestigungsanordnungen (10) gesichert ist.

9. Befestigungsanordnung nach Anspruch 7 oder 8, wobei ein Kürzungselement (73), das die Befestigungsanordnung bedeckt, am Strukturelement (70) gesichert ist.

## Revendications

1. Procédé de fixation d'un élément structurel (26 ; 70), en particulier d'un agencement de bande (70) sur une pièce de travail (12), en particulier sur une partie de corps, avec les étapes de :
- fixer un tenon (14) à la pièce de travail (12) ;
- pré-monter un élément de fixation (16) sur l'élément structurel (26 ; 70), l'élément de fixation (16) ayant un logement à tenon (18 ; 56) ;
- pousser l'élément de fixation (16) dans une direction longitudinale (z) sur le tenon (14) ; et
- déplacer l'élément structurel (26 ; 70) dans une direction (x) transversale par rapport à la direction longitudinale (z), une partie d'entraînement (28 ; 80) de l'élément structurel (26 ; 70) s'engageant sur l'élément de fixation (16) de telle sorte que l'élément de fixation (16) est entraîné en rotation (34) autour de l'axe longitudinal (z).

2. Procédé selon la revendication 1, le tenon (14) ayant au moins un filet (22), et le logement de tenon (18 ; 56) comportant au moins un élément de blocage (20 ; 60) coopérant avec le filet (22), de sorte que, pendant l'étape de déplacement (32), l'élément de fixation (16), ensemble avec l'élément structurel (26 ; 70) fixé à celui-ci, est déplacé dans la direction de l'axe longitudinal (z).

3. Procédé selon l'une des revendications 1 à 2, l'élément de fixation (16) étant fixé à l'élément structurel (70) par enclenchement lors de l'étape de pré-montage, et la liaison par enclenchement (52, 82) étant libérée pendant l'étape de déplacement (32).

4. Procédé selon l'une des revendications 1 à 3, l'élément de fixation (16) étant fixé à l'élément structurel (70) de manière flottante dans au moins une direction (y) transversale par rapport à la direction longitudinale (z).

5. Elément de fixation (16), en particulier pour la mise en oeuvre du procédé selon l'une des revendications 1 à 4, avec un corps de base creux (40) avec au moins un nez d'enclenchement (50) s'étendant radialement depuis le corps de base (40), dont l'espace intérieur comporte un logement à tenon (18 ; 56) pour la réception axiale d'un tenon (14) et à l'extérieur duquel est formée une partie de fixation pour la fixation axiale d'un élément structurel (26 ; 70), une partie de moyeu (54) y étant formée, en outre, sur le corps de base (40) qui comporte au moins un moyeu (54) s'étendant radialement depuis le corps de base (40), et est conçu, lors d'un déplacement (32) de l'élément structurel (26 ; 70) fixé axialement transversalement par rapport à la direction axiale, pour être entraîné par une partie d'entraînement (28 ; 80) de l'élément structurel (26 ; 70), de sorte que l'élément de fixation (16) est entraîné en rotation, dans lequel la partie de fixation présente une première partie de bride (42) et une seconde partie de bride (44) qui est espacée axialement de la première partie de bride (42), la seconde partie de bride (44) s'étendant dans la direction circonférentielle sur une plage angulaire (46) inférieure à 180°, et dans lequel la seconde partie de bride (44) est alignée dans la direction axiale avec une partie de moyeu (54) et/ou avec l'au moins un nez d'enclenchement (50) dans lequel le nez d'enclenchement (50) peut être déformé élastiquement dans la direction axiale (z) et est conçu pour s'engager dans une dépression d'enclenchement (82) de l'élément structurel (70) lorsque l'élément structurel (70) est pré-monté sur l'élément de fixation (16).

6. Elément de fixation selon la revendication 5, le logement à tenon (18 ; 56) ayant au moins un élément de blocage (20 ; 60) déformable élastiquement dans la direction radiale.

7. Agencement de fixation (10) avec un tenon (14) qui est relié à une surface d'une pièce de travail (12) et avec un élément de fixation (16) qui comporte un logement à tenon (18) et une partie de fixation (24), l'élément de fixation (16) étant poussé sur le tenon (14), et un élément structurel (26 ; 70) étant fixé axialement à l'élément de fixation (16), l'élément de fixation étant un élément de fixation (16) selon l'une des revendications 5 à 6.

8. Agencement de fixation selon la revendication 7, l'élément structurel étant un agencement de bande (70) qui est fixé à la pièce de travail (12) au moyen d'une pluralité d'agencements de fixation (10).

9. Agencement de fixation selon la revendication 7 ou 8, un élément d'habillage (73) qui recouvre l'agencement de fixation (10) étant fixé à l'élément structurel (70).
